(19) Europäisches Patentamt
European Patent Office
Office européen des brevets

(11) **EP 0 792 341 B1**

(12) **EUROPÄISCHE PATENTSCHRIFT**

(45) Veröffentlichungstag und Bekanntmachung des Hinweises auf die Patenterteilung:
**03.06.1998 Patentblatt 1998/23**

(21) Anmeldenummer: **95938430.6**

(22) Anmeldetag: **07.11.1995**

(51) Int Cl.⁶: **C11D 3/37**

(86) Internationale Anmeldenummer:
**PCT/EP95/04373**

(87) Internationale Veröffentlichungsnummer:
**WO 96/16149 (30.05.1996 Gazette 1996/25)**

(54) **VERFAHREN ZUR HERSTELLUNG VON FEINTEILIGEN MISCHUNGEN AUS AMPHIPHILEN POLYMEREN UND ANORGANISCHEN FESTSTOFFEN**

PROCESS FOR PREPARING FINE-PARTICLE MIXTURES OF AMPHIPHILIC POLYMERS AND INORGANIC SOLIDS

PROCEDE DE PREPARATION DE MELANGES A FINES PARTICULES COMPOSES DE POLYMERES AMPHIPHILES ET DE SOLIDES INORGANIQUES

(84) Benannte Vertragsstaaten:
**AT BE CH DE DK ES FR GB IT LI NL PT SE**

(30) Priorität: **18.11.1994 DE 4441189**

(43) Veröffentlichungstag der Anmeldung:
**03.09.1997 Patentblatt 1997/36**

(73) Patentinhaber: **BASF AKTIENGESELLSCHAFT 67056 Ludwigshafen (DE)**

(72) Erfinder:
• **JÄGER, Hans-Ulrich D-67434 Neustadt (DE)**
• **BOECKH, Dieter D-67117 Limburgerhof (DE)**
• **BRÖCKEL, Ulrich D-67251 Freinsheim (DE)**
• **MÜLLER, Frank D-67071 Ludwigshafen (DE)**
• **SCHORNICK, Gunnar D-67271 Neuleiningen (DE)**

(56) Entgegenhaltungen:
**WO-A-95/21880        DE-A- 2 249 812**
**DE-A- 3 531 755**

• **DIALOG INFORMATION SERVICES, File 350, WPI 63-80; MATSUSHITA ELECTRIC WORKS, Dialog AN 002552622, WPI AN 80-70647c/40**

**Beschreibung**

Die Erfindung betrifft ein Verfahren zur Herstellung von feinteiligen Mischungen aus amphiphilen Polymeren und anorganischen Feststoffen sowie die Verwendung der Mischungen als Zusatz zu Waschmitteln.

Amphiphile Polymerisate mit sehr unterschiedlichen Eigenschaften im festen Zustand sind bekannt. Sie können kristallin, teilweise kristallin, glasartig erstarrt oder im kautschukelastischen Zustand oberhalb der Glasübergangstemperatur vorliegen. Amphiphile Polymere mit hoher Kristallinität werden beispielsweise durch Kondensation von Terephthalsäure oder Dimethylterephthalat mit Ethylenglykol und Polyethylenglykol hergestellt (vgl. US-A-3 557 039). Solche Polyester werden als Waschmitteladditiv verwendet. Sie verhindern beim Waschen von Textilgut die Wiederablagerung von Schmutz auf dem Textilgut, vgl. GB-A-1 154 730.

Aus den EP-Anmeldungen 185 427, 241 984, 241 985 und 272 033 sind Polyesterkondensate von mehrwertigen aromatischen Carbonsäuren mit zweiwertigen Alkoholen und einseitig $C_1$-$C_4$-verschlossenen Polyethern bekannt, die die Schmutzablösung von Polyestergeweben fördern. Diese Polyester besitzen hydrophile Endgruppen, die in den genannten Anmeldungen als Voraussetzung für die schmutzablösenden Eigenschaften der Polyester genannt werden.

Amphiphile Polyester aus aliphatischen mehrbasischen Carbonsäuren und/oder Monohydroxymonocarbonsäuren mit Polyethylenglykol werden beispielsweise in Polymer Bulletin, Band 17, 499 - 506 (1987) beschrieben.

Aus der US-A-5 142 020 sind amphiphile Polyester bekannt, die erhältlich sind durch Kondensation von

(a)     Carbonsäuren mit mindestens 2 Carboxylgruppen, deren Estern, Anhydriden oder Mischungen,

(b)     mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und

(c)     wasserlöslichen Anlagerungsprodukten von 5 bis 80 mol mindestens eines Alkylenoxids an 1 mol $C_8$- bis $C_{29}$-Alkohole, $C_8$-bis $C_{18}$-Alkylphenole oder $C_8$- bis $C_{18}$-Alkylamine

im Molverhältnis (a):(b):(c) von 100:(25 bis 2500):(5 bis 110) bei Temperaturen von mindestens 120°C bis zu Molekulargewichten (Gewichtsmittel) von 2000 bis 50000. Die Polyester werden als vergrauungsinhibierender und schmutzablösungsfördernder Zusatz zu pulverförmigen und flüssigen Waschmitteln verwendet.

Die oben beschriebenen Polyester werden meistens in Form von wäßrigen Lösungen oder Dispersionen in die Waschmittelformulierungen eingearbeitet. Diese Anwendungsform ist aber in vielen Fällen unpraktisch oder sogar ungeeignet. Beispielsweise kann man die meisten Dispersionen von solchen amphiphilen Polyestern bei Raumtemperatur nicht in Konzentrationen oberhalb von 25 % verarbeiten, weil die Viskosität zu hoch ist. Hinzu kommt noch, daß eine Verarbeitung von wäßrigen Dispersionen amphiphiler Polyester unter alkalischen Bedingungen bei den üblichen höheren Verarbeitungstemperaturen meistens mit einer Hydrolyse und damit einem Wirksamkeitsabfall der Polyester zu rechnen ist.

Man hat daher Mischungen aus amphiphilen Polyestern und extrudierbaren organischen Feststoffen in fester Form miteinander vermahlen, die Mischung anschließend extrudiert und das Extrudat beispielsweise zu einem Granulat geformt, vgl. DE-A-22 49 812. Aus der DE-A-35 31 755 sind Mischungen aus amphiphilen Polyestern und Polycarboxylaten bekannt, die durch Mischen geschmolzener Polyester mit einem Polyacrylat, Abkühlen der Mischung und Verkleinern des erhaltenen festen Produkts durch kryogene Methoden auf die gewünschte Teilchengröße erhältlich sind. Die kryogene Zerkleinerung des Materials wird dabei bei Temperaturen unter 0°C, manchmal sogar unter -50°C durchgeführt. Als Kühlmittel hierfür wird flüssiger Stickstoff oder festes Kohlendioxid (Trockeneis) empfohlen.

Die bisher beschriebenen granulatförmigen amphiphilen Polyester haben nur eine geringe mechanische Stabilität und verbacken bei der Lagerung. Aus der JP-A-55/109 614 ist bekannt, Polyesterharze und Füllstoffe im festen Zustand in einer Mühle zu mischen. Die anorganischen Füllstoffe dienen dabei im wesentlichen als Trennmittel, die ein Zusetzen der Mühle verhindern sollen, indem sie sofort die klebrigen Oberflächen der Polyesterharze bedecken. Nachteilig bei diesem Verfahren ist, daß die Trennmittel praktisch nur auf der Oberfläche der Partikel angelagert sind und daher keine formstabilisierende Wirkung entfalten können.

Der Erfindung liegt die Aufgabe zugrunde, ein Verfahren zur Herstellung von feinteiligen Mischungen aus amphiphilen Polymeren und anorganischen Feststoffen zur Verfügung zu stellen, bei dem man feinteilige Mischungen mit einer erhöhten mechanischen Stabilität erhält, so daß die einzelnen Teilchen bei der Lagerung praktisch nicht miteinander verbacken.

Die Aufgabe wird erfindungsgemäß gelöst, mit einem Verfahren zur Herstellung von feinteiligen Mischungen aus amphiphilen Polymeren und anorganischen Feststoffen, wenn man

(a)     97 bis 10 Gew.-% mindestens eines amphiphilen Polymeren, dessen Erweichungstemperatur oberhalb von 35°C liegt, und

(b)     3 bis 90 Gew.-% mindestens eines anorganischen Feststoffs mit einer mittleren Teilchengröße bis zu höchstens 500 µm

auf eine Temperatur erhitzt, die oberhalb der Erweichungstemperatur des Polymeren liegt, die Komponenten (a) und (b) bei dieser Temperatur durchmischt, die Mischung danach zerteilt und rasch abkühlt, daß praktisch keine Entmischung eintritt und gegebenenfalls die Mischung anschließend bei Temperaturen unterhalb von 50°C auf eine Teilchengröße von 50 µm bis 5 mm zerkleinert.

Vorzugsweise werden vollständig kristalline oder teilweise kristalline, wasserdispergierbare, amphiphile Polymere eingesetzt.

In der Regel ist beispielsweise für die homogene Vermischung der Komponenten a) und b) eine Mischtemperatur erforderlich, die oberhalb der Erweichungstemperatur der Polymeren a) liegt. Im Falle nicht kristalliner amphiphiler Polymerer ist das eine Temperatur oberhalb der Glasübergangstemperatur, im Falle kristalliner amphiphiler Polymerer eine Temperatur oberhalb des ersten Maximums im DSC (Differential Scanning Calorimetry), bei der die thermoplastische Verarbeitbarkeit in dem gewählten Mischaggregat gegeben ist.

Bei den teilweise kristallinen, amphiphilen Polymeren handelt es sich hauptsächlich um Polyester. Teilweise kristallin bedeutet beispielsweise, daß die Polymeren einen Kristallisationsgrad von 0,5 bis 100, vorzugsweise mindestens jedoch 20 bis 90 % haben. Kristallinität bedeutet in diesem Zusammenhang, daß im DSC der Polymeren mit aufsteigender Temperatur ein Maximum durchlaufen wird, das üblicherweise einem Peak innerhalb eines Temperaturintervalls von unter 50°C zuzuordnen ist und durch das Aufschmelzen regelmäßiger Teilstrukturen im Polymer verursacht wird. Innerhalb einer Polymerklasse kann der Grad an Kristallinität mit der Fläche unter dem Peak korreliert werden. Die erfindungsgemäß eingesetzten Polyester haben beispielsweise eine Molmasse $M_W$ von 4000 bis 60.000 und enthalten als hydrophile Einheiten Polyethylenglykol, Blockcopolymerisate aus Ethylenoxid und Propylenoxid und/oder Butylenoxid mit Molmassen $M_n$ von 500 bis 8000 und/oder Sulfogruppen enthaltende ein- oder mehrbasische Carbonsäuren und weisen als hydrophobe Einheiten kondensierte Blöcke aus aromatischen mehrbasischen Carbonsäuren, gegebenenfalls in Kombination mit aliphatischen mehrbasischen Carbonsäuren und $C_2$- bis $C_4$-Alkylenglykolen und/oder 3- oder mehrwertigen Alkoholen auf.

Amphiphile Polyester der genannten Art sind aus den eingangs erwähnten Literaturstellen bekannt, vgl. US-A-3 557 039, EP-A-0 185 427, EP-A-0 241 984, EP-A-0 241 985, EP-A-0 272 033 und US-A-5 142 020. Eine bevorzugte Klasse von teilweise kristallinen, amphiphilen Polymeren sind Polyester, die Einheiten von

(1)     Ethylenterephthalat und

(2)     Polyoxyethylenterephthalat von Polyethylenglykolen mit Molmassen $M_n$ von 1000 bis 7500

im Gewichtsverhältnis (1) : (2) von 1 : 1 bis 1 : 25 enthalten.

Eine weitere Klasse von in Betracht kommenden amphiphilen Polymeren sind aus der US-A-5 142 020 bekannte Polyester, die erhältlich sind durch Kondensation von

(1)     Carbonsäuren mit mindestens 2 Carboxylgruppen, deren Estern, Anhydriden oder Mischungen,

(2)     mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und

(3)     wasserlöslichen Anlagerungsprodukten von 5 bis 80 mol mindestens eines Alkylenoxids an 1 Mol $C_8$-bis $C_{24}$-Alkohole, $C_8$- bis $C_{18}$-Alkylphenole oder $C_8$-bis $C_{24}$-Alkylamine

im Molverhältnis (1) : (2) : (3) von 100 : (25 bis 2500) : (5 bis 110) bei Temperaturen von mindestens 120°C bis zu Molmassen $M_W$ von 4000 bis 50.000.

Eine weitere Klasse von bevorzugt in Betracht kommenden amphiphilen Polymeren sind aus der nicht vorveröffentlichten DE-A 44 03 866 bekannte Polyester. Sie enthalten Blöcke aus

(1)     Estereinheiten aus Polyalkylenglykolen einer Molmasse von 500 bis 7500 und aliphatischen Dicarbonsäuren und/oder Monohydroxycarbonsäuren und

(2)     Estereinheiten aus aromatischen Dicarbonsäuren und mehr) wertigen Alkoholen

und haben Molmassen $M_W$ von 4000 bis 25000. Das Gewichtsverhältnis der Estereinheiten (1) : (2) beträgt dabei vorzugsweise 5:1 bis 1:2. Amphiphile Polyester dieser Art werden beispielsweise dadurch hergestellt, daß man zunächst durch Polykondensation

(1) aliphatische Polyester von Polyalkylenglykolen einer Molmasse von 500 bis 7500 mit aliphatischen Dicarbonsäuren und/oder Monohydroxycarbonsäuren herstellt und anschließend in dem so erhaltenen aliphatischen Polyester

(2) aromatische Polyester aus aromatischen Dicarbonsäuren und mehrwertigen Alkoholen herstellt.

Die Reihenfolge der Polykondensation kann dabei auch umgekehrt werden oder man kondensiert aromatische Polyester (2) mit oligomeren aliphatischen Polyestern (1). Das Gewichtsverhältnis der Polyester (1) : (2) in den amphiphilen Polyestern beträgt 5:1 bis 1:2.

Geeignete oben beschriebene Polyester sind in Abhängigkeit von der Molmasse bei Temperaturen unterhalb der Erweichungstemperatur wachsartig bis weich kristallin und haben eine Erweichungstemperatur oberhalb von 35°C. Unter Erweichungstemperatur soll im vorliegenden Zusammenhang bei teilweise oder vollständig kristallinen Polymeren immer das Maximum des Wärmeflusses im DSC beim Aufheizen verstanden werden. Die Bestimmung erfolgt mit Hilfe der DSC-Methode (Differential Scanning Calorimetry) mit einer Heizrate von 2,5°C/min. Die Bestimmungsmethode wird ausführlich beschrieben von J.F. Rabek, Experimental Methods in Polymer Chemistry, John Wiley & Sons, New York, 1980, Seiten 549-581. Die besonders bevorzugt eingesetzten amphiphilen Polyester haben Erweichungstemperaturen oberhalb von 45°C. Sie sind beispielsweise dadurch erhältlich, daß man bei der Herstellung der Polyester zur Bildung des hydrophilen Teil des Moleküls höhermolekulare Polyalkylenglykole einsetzt, z.B. Polyethylenglykole mit Molmassen von mindestens 1500, vorzugsweise mindestens 2500. Die dann entstehenden Polyester haben vorzugsweise Molmassen Mw von mindestens 4000. Polyester mit Erweichungstemperaturen oberhalb von 45°C sind auch dadurch herstellbar, daß man bei der Polykondensation aromatische Carbonsäuren mit freien Sulfogruppen wie Sulfoisophthalsäure einsetzt und die Sulfonsäuregruppen nach Abschluß der Polykondensation mit Alkalimetalloder Erdalkalimetallbasen neutralisiert.

Außer den oben beschriebenen Polyestern eignen sich amphiphile Polymere, die beispielsweise durch Pfropfen von Acrylsäureestern, Methacrylsäureestern, Vinylacetat und/oder Vinylpropionat auf wasserlöslichen Polyalkylenglykolen erhältlich sind. Die wasserlöslichen Polyalkylenglykole haben beispielsweise Molmassen $M_N$ von 2500 bis 20 000, vorzugsweise 4000 bis 9000 und können gegebenenfalls ein- oder beidseitig Endgruppen-verschlossen sein. Polymere dieser Art sind beispielsweise bekannt aus US-A-4 846 995, US-A-4 904 408, US-A-4 846 994 und DE-A-3 711 299.

Weitere geeignete, amphiphile Polymere sind Pfropfpolymerisate, die erhältlich sind von Pfropfen von

(1) Polykondensaten auf Basis von Polyestern, Polyesterurethanen und Polyesteramiden eines Molekulargewichts (Zahlenmittel) von jeweils 2500 bis 100.000 mit

(2) 0,2 bis 10 Gew.-Teilen, bezogen auf 1 Gew.-Teil der Polykondensate, an Vinylestern, gesättigter $C_1$- bis $C_6$-Carbonsäuren und/oder Acrylsäure- und/oder Methacrylsäureestern von gesättigten, einwertigen 1 bis 4 C-Atome enthaltenden Alkoholen.

Solche Pfropfpolymerisate sind beispielsweise aus der US-A-4 849 126 bekannt.

Die amphiphilen Polymerisate werden mit anorganischen Feststoffen gemischt. Als anorganische Feststoffe kommen vorzugsweise solche Verbindungen in Betracht, die üblicherweise in Textilwaschmitteln verwendet werden. Beispiele hierfür sind Carbonate, Sulfate, Silikate, Borate oder Phosphate von Alkalimetallen und/oder Erdalkalimetallen, Zeolithe, Kieselsäure oder Mischungen der genannten Verbindungen. Als Silikate eignen sich beispielsweise Ionenaustauscher wie Zeolithe oder Schichtsilikate sowie amorphe Silikate und gefällte Kieselsäure. Bevorzugt eingesetzte anorganische Feststoffe sind Zeolithe, Natriumsulfat und Natriumcarbonat.

Die Mischungen enthalten 97 bis 10, vorzugsweise 75 bis 30 Gew.-% mindestens eines amphiphilen Polymeren und 3 bis 90, vorzugsweise 25 bis 70 Gew.-% eines anorganischen Feststoffs. Besonders bevorzugt sind solche Mischungen, die 70 bis 45 Gew.-% der oben unter (a) beschriebenen amphiphilen Polymeren und 30 bis 55 Gew.-% mindestens eines anorganischen Feststoffs enthalten. Die mittlere Teilchengröße der anorganischen Feststoffe beträgt z.B. 1 bis 500 µm und liegt meistens in dem Bereich von 1 bis 200, vorzugsweise 10 bis 100 µm.

Die Komponenten (a) und (b) können beispielsweise zunächst bei Raumtemperatur, bei der beide Feststoffe darstellen, gemischt werden. Man kann jedoch auch so verfahren, daß man zunächst die Verbindungen der Komponente (a) aufschmilzt und eine oder mehrere Verbindungen der Gruppe (b) zufügt und für eine gute Durchmischung sorgt. Die anorganischen Feststoffe liegen dann in Form einer Dispersion in den erweichten oder geschmolzenen Polymeren vor. Beim langsamen Abkühlen solcher Mischungen beobachtet man eine mehr oder weniger starke Entmischung. Die Komponenten (a) und (b) werden zur Herstellung der Mischungen auf Temperaturen erhitzt, die oberhalb der Erweichungstemperatur der Polymeren liegen, wobei je nach Art des verwendeten Mischaggregats ein geringfügiges Überschreiten der Erweichungstemperatur ausreichend sein kann oder deutlich höhere Temperaturen erforderlich sind, z.

B. mindestens 10°C oberhalb der Erweichungstemperatur des Polymeren. Vorzugsweise mischt man die Komponenten (a) und (b) bei Temperaturen in dem Bereich von 80 bis 200°C. Die Vermischung der beiden Komponenten kann beispielsweise in einem Kessel vorgenommen werden, der mit einem Rührer ausgestattet ist oder in kontinuierlichen Mischern, wie statischen Mischern, die mit fest eingebauten Mischelementen ausgestattet sind oder in Zwangsmischern, die über Schnecken oder mit Werkzeugen bestückte Wellen die Durchmischung der beiden Komponenten (a) und (b) erzwingen. Die geschmolzene und homogenisierte Mischung wird dann rasch auf eine Temperatur, bei der die Viskosität der Mischung so hoch ist, daß eine Trennung praktisch nicht mehr eintritt, abgekühlt. Vorzugsweise wird die Mischung so abgekühlt, daß ihre Viskosität innerhalb von 30 sek auf mehr als 5000 mPas, besonders bevorzugt auf über 50.000 mPas bei einer Scherrate von 0,01 $s^{-1}$ ansteigt. Vorzugsweise wird im Falle vollständig oder teilweise kristalliner Polymerer a) die Mischung dann weiter bis unter die Erstarrungstemperatur abgekühlt. Dies geschieht beispielsweise dadurch, daß man die Schmelze auf eine gekühlte Oberfläche spritzt und dadurch granuliert. Man kann die geschmolzene Mischung auch auf ein Kühlband aufbringen oder durch Prillen in gekühlter Luft erstarren lassen. Besonders vorteilhaft ist eine Pastillierung der geschmolzenen Mischung. Man kann die geschmolzene Mischung jedoch auch beispielsweise in Form von Bändern oder Strängen auf ein gekühltes Band aufgeben und dadurch rasch abkühlen. Außerdem ist es möglich, eine dünne Schicht vollflächig auf ein gekühltes Band aufzugeben. In den zuletzt genannten Fällen ist es jedoch erforderlich, daß man die erstarrte Schmelze, die dann beispielsweise in Form von Bändern, Strängen oder Folien vorliegt, auf mittlere Teilchengrößen von 50 µm bis zu 5 mm zerkleinert. Eine rasche Abkühlung der homogenen Mischung aus den Komponenten (a) und (b) ist eine wesentliche Voraussetzung dafür, daß sich die Komponenten nicht entmischen. Die erstarrte Schmelze kann gegebenenfalls auf eine jeweils gewünschte Korngröße zerkleinert werden. Vorzugsweise mahlt man die Mischung nach dem Zerteilen und Abkühlen in Mühlen auf mittlere Korngrößen von 0,3 bis 1,3 mm.

Die so erhältlichen feinteiligen Mischungen aus den Komponenten (a) und (b) haben eine hohe mechanische Stabilität und sind bei Raumtemperatur lagerstabil. Sie können selbst nach längerer Lagerung ohne Schwierigkeiten weiterverarbeitet werden. Die nach dem erfindungsgemäßen Verfahren erhältlichen Mischungen werden beispielsweise bei der Herstellung von Waschmitteln verwendet. Die Polymeren wirken beim Waschen von Wäsche als Vergrauungsinhibitoren und als Schmutzlöser.

Die Mischungen aus den Komponenten (a) und (b) können gegebenenfalls noch weitere Polymere enthalten, die üblicherweise in Waschmittelformulierungen eingesetzt werden. Solche Polymeren sind beispielsweise Polycarboxylate, wie teilweise oder vollständig neutralisierte Polyacrylsäuren eines Molgewichts von 1000 bis 130.000 und Copolymerisate aus 90 bis 10 Gew.-% Maleinsäure und 10 bis 90 Gew.-% Acrylsäure oder Methacrylsäure, wobei das Molekulargewicht der Copolymerisate 1000 bis 100.000, vorzugsweise 40.000 bis 75.000 g/Mol beträgt. Außerdem eignen sich Co-und Terpolymere von Vinylestern mit ungesättigten Carbonsäuren, deren Acetatgruppen auch vollständig oder teilweise verseift sein können, Polymaleinsäuren oder deren Alkalimetallsalze als weitere Polymere. Die in Betracht kommenden Terpolymere enthalten 1 bis 50 Mol-% Vinylester oder Vinylalkoholeinheiten und besitzen Molmassen von 1000 bis 100.000. Die in Betracht kommenden Polymaleinate haben Molmassen von 500 bis 10.000. Weitere geeignete polymere Zuschlagstoffe sind Polyasparaginsäuren oder Polyaspartimide mit Molmassen von 500 bis 120.000, vorzugsweise 1000 bis 50.000 oder Pfropfpolymerisate, die durch Pfropfen von Maleinsäure und Acrylsäure auf Oligo- und Polysacchariden, Sorbit oder Glukose erhältlich sind. Die Pfropfpolymerisate werden vorzugsweise in Form der Natriumsalze eingesetzt. Falls man zu der Mischung aus den Komponenten (a) und (b) noch ein Polycarboxylat zusetzt, betragen die Mengen an Polycarboxylat 0,5 bis 70, vorzugsweise 10 bis 50 Gew.-%, bezogen auf die Komponenten (a) und (b).

Die nach dem erfindungsgemäßen Verfahren erhältlichen feinteiligen Mischungen können gegebenenfalls noch mit 0,1 bis 5, vorzugsweise 0,5 bis 2 Gew.%, bezogen auf die Mischungen, eines festen Trennmittels mit einer Teilchengröße von 1 bis 100, vorzugsweise < 10 µm gepudert werden. Geeignete Trennmittel sind beispielsweise organische Verbindungen wie die Salze von Polycarbonsäuren, z.B. Polynatriumacrylat, Natriumcitrat und Natriumsalze von Copolymerisaten auf Acrylsäure und Maleinsäure, sowie üblicherweise als Trennmittel verwendete anorganische Materialien wie feinteilige Kieselsäure, Siliciumdioxid, Zeolith, Natriumsulfat, Bentonit oder Talk.

Falls die aus der homogenisierten Schmelze durch rasches Abkühlen erhältlichen feinteiligen Produkte wie Granulate oder Pastillen einem weiteren Zerkleinerungsschritt unterworfen werden, z.B. gemahlen werden, so erfolgt dies selbstverständlich bei Temperaturen unterhalb der Erweichungstemperatur des Polymeren, vorzugsweise bei Raumtemperatur. In einigen Fällen kann eine zusätzliche Kühlung des Zerkleinerungsaggregats von Vorteil sein, so daß die Zerkleinerung der zunächst erhaltenen gröberen Formkörper beispielsweise bei Temperaturen in dem Bereich von -15 bis 25°C vorgenommen wird.

Die in den Beispielen angegebenen Teile sind Gewichtsteile.

Beispiele

Polymer 1

Polyester der Molmasse $M_W$ von 8400 aus Polyethylenglykol der Molmasse $M_N$ von 1500 mit Terephthalsäure und Ethylenglykol (Molverhältnis Ethylenterephthalat zu Polyethylenterephthalat gleich 1,5:1). Der Polyester hat eine Erweichungstemperatur von 38°C.

Polymer 2

Polyester der Molmasse $M_W$ von 10.200 aus Polyethylenglykol der Molmasse $M_N$ von 4000 mit Terephthalsäure und Ethylenglykol, wobei das Molverhältnis Ethylenterephthalat zu Polyethylenterephthalat gleich 5:1 ist. Der Polyester hat eine Erweichungstemperatur von 47°C.

Beispiel 1

In einem Kessel, der mit einem Rührer versehen ist, werden 50 kg Polymer 1 auf eine Temperatur von 140°C erhitzt. Die Schmelze des Polymeren wird gerührt und mit 50 kg Natriumsulfat vermischt, das eine mittlere Teilchengröße von 100 µm hat. Sobald eine homogene Mischung von Natriumsulfat im Polymer 1 entstanden ist, wird die Schmelze auf ein Pastillierband abgelassen. Bei einer Kühlbandtemperatur von 9°C erstarren die Tropfen der Schmelze innerhalb von 2 min zu festen Pastillen. Die Länge des Kühlbands beträgt 5 m, feste Pastillen liegen auf einer Länge von 4 m vor. Diese Pastillen können auf einer gegenläufigen Rotormühle ohne zusätzliche Kühlung auf einen mittleren Teilchendurchmesser von kleiner oder gleich 1,3 mm gemahlen werden. Um die Lagerstablität der feinteiligen, gemahlenen Mischung zu erhöhen, kann man, bezogen auf die Mischung 2 Gew.-% Natriumsulfat mit einer mittleren Teilchengröße von 5 µm zum Pudern verwenden. Man erhält dann ein gepudertes Granulat, das bis zu Temperaturen von 35°C lagerstabil ist.

Beispiel 2

In einem mit einem Rührer versehenen Kessel werden 50 kg Polymer 2 bei einer Temperatur von 140°C analog Beispiel 1 mit 50 kg Natriumsulfat vermischt. Die Schmelze wird unter ständigem Rühren auf ein Pastillierband abgelassen. Bei einer Kühlbandtemperatur von 9°C erstarren die Schmelzetropfen zu festen Pastillen. Bei einer Bandlänge von 5 m liegen auf einer Länge des Bandes von 4 m feste Pastillen vor. Die Pastillen werden anschließend auf einer gegenläufigen Rotormühle ohne zusätzliche Kühlung gemahlen, so daß man ein Granulat mit einem mittleren Teilchendurchmesser von 1,3 mm erhält. Das Granulat ist in dieser Form bei einer Temperatur bis zu 35°C lagerstabil.

Beispiel 3

In einem Rührkessel werden 50 kg Polymer 2 bei einer Temperatur von 140°C mit 50 kg gemahlenem Natriumsulfat einer mittleren Teilchengröße von 50 µm vermischt und wie im Beispiel 1 beschrieben pastilliert. Die Pastillen wurden anschließend mit flüssigem Stickstoff auf eine Temperatur von 15°C abgekühlt und in einer Hammermühle auf eine mittlere Teilchengröße von kleiner oder gleich 1,3 mm gemahlen. Das so erhältliche Granulat ist bei einer Temperatur bis zu 35°C lagerstabil.

Beispiel 4

In einem Kessel, der mit einem Rührer versehen ist, werden 50 kg Polymer 2 auf eine Temperatur von 140°C erhitzt und mit 50 kg gemahlenem Natriumsulfat einer mittleren Teilchengröße von 50 µm vermischt. Die heiße Schmelze wird anschließend in flache Formen gegossen, und darin in dünnen, ca 1 cm dicken Schichten rasch abgekühlt, so daß die zerteilte Schmelze erstarrt. Nach dem Erstarren werden die so erhaltenen flachen Blöcke in einer Hammermühle auf eine Teilchengröße von ca. 1 cm vorzerkleinert und danach, wie in Beispiel 3 beschrieben, durch Kühlen mit flüssigem Stickstoff auf eine Temperatur von 15°C auf eine mittlere Teilchengröße von kleiner 1,3 mm gemahlen. Das so erhältliche Granulat ist bei Temperaturen bis zu 35°C lagerstabil.

Die schmutzablösende Wirkung (Soil release Wirkung) des nach Beispiel 1 erhaltenen gepuderten Granulats wurde im Waschtest ermittelt. Tabelle 1 enthält die Waschbedingungen. Es wurde 3 mal vorgewaschen. Daran anschließend wurde die Remission (R1) der Prüfgewebe bestimmt. Verwendet wurde ein Meßgerät Elrepho 2000 von Firma Datacolor. Das Prüfgewebe wurde mit gebrauchtem Motoröl angeschmutzt. Nach einer Einwirkungsdauer von 24 h bestimmte man die Remission (R2) der angeschmutzten Prüfgewebe. Danach wurde nochmals gewaschen und die Remission R3) gemessen. Die Schmutzablösung S in % wurde nach der Formel

$$S = (R3-R2) / (R1-R2) * 100 \text{ berechnet.}$$

Tabelle 1

| Waschbedingungen | |
|---|---|
| Waschgerät | Launder-o-meter |
| Waschmittelflotte | 250 ml |
| Waschmitteldosierung | 6 g/l |
| Waschzeit | 30 min |
| Waschtemperatur | 45°C, 50°C |
| Vorwaschzyklen | 3 |
| Prüfgewebe | 10 g Baumwolle, 5 g Polyester/ Baumwolle, 5 g Polyester |
| Anschmutzung | 0,2 g gebrauchtes Motoröl auf Polyester |

Die schmutzablösende Wirkung der erfindungsgemäß nach Beispiel 1 hergestellten Mischung im Vergleich zu Polymer 1 wurde anschließend ermittelt. Beide Produkte wurden durch Sieben in einer Laborsiebmaschine auf gleiche Weise fraktioniert. Es wurde die Fraktion von 0,315 mm bis 0,500 mm in den Waschversuchen verwendet. In den Versuchen wurden jeweils gleiche Mengen an aktivem Polymer eingesetzt, und zwar 0,5 % aktives Polymer (Tabelle 2: A, B) und 1,0 % aktives Polymer (Tabelle 2: C, D). Die Angaben beziehen sich auf die Menge des eingesetzten Waschmittels. Als Waschmittel wurde ein handelsübliches Colorwaschmittel, Persil® color der Firma Henkel KGaA, verwendet.

Tabelle 2

| Schmutzablösung | | |
|---|---|---|
| S (%) | 45°C | 50°C |
| ohne Polymer | 21,9 | 24,6 |
| A 1,0 % der Mischung gemäß Beispiel 1 | 60,2 | 75,8 |
| B 0,5 % Polymer 1 | 47,0 | 68,0 |
| S (%) | 45°C | 50°C |
| ohne Polymer | 21,9 | 24,6 |
| C 2,0 % der Mischung gemäß Beispiel 1 | 77,6 | 82,4 |
| D 1,0 % Polymer 1 | 76,7 | 82,1 |

Die Ergebnisse in Tabelle 2 zeigen, daß in allen Fällen die Schmutzentfernung (S) durch Polymerzusatz verbessert wird. Die Wirkung des nach dem erfindungsgemäßen Beispiels erhaltenen Produkts ist gegenüber der Wirkung von Polymer 1 deutlich erhöht. Die Vorteile sind bei niedriger Polymerkonzentration (Tabelle 2: A, B) besonders groß.

**Patentansprüche**

1. Verfahren zur Herstellung von feinteiligen Mischungen aus amphiphilen Polymeren und anorganischen Feststoffen, dadurch gekennzeichnet, daß man

    (a)    97 bis 10 Gew.-% mindestens eines amphiphilen Polymeren, dessen Erweichungstemperatur oberhalb von 35°C liegt, und

    (b)    3 bis 90 Gew.-% mindestens eines anorganischen Feststoffs mit einer mittleren Teilchengröße bis zu höchstens 500 µm

auf eine Temperatur erhitzt, die oberhalb der Erweichungstemperatur des Polymeren liegt, die Komponenten (a) und (b) bei dieser Temperatur durchmischt, die Mischung danach zerteilt und rasch abkühlt, daß praktisch keine Entmischung eintritt und gegebenenfalls die Mischung anschließend bei Temperaturen unterhalb von 50°C auf eine mittlere Teilchengröße von 50 µm bis 5 mm zerkleinert.

2.  Verfahren nach Anspruch 1, dadurch gekennzeichnet, daß man vollständig oder teilweise kristalline, wasserdispergierbare, amphiphile Polymere einsetzt.

3.  Verfahren nach Anspruch 2, dadurch gekennzeichnet, daß man als teilweise kristalline, amphiphile Polymere Polyester mit einer Molmasse $M_W$ von 4000 bis 60000 einsetzt, die als hydrophile Einheiten Polyethylenglykol, Blockcopolymerisate aus Ethylenoxid und Propylenoxid und/Butylenoxid mit Molmassen $M_N$ von 500 bis 8000 und/oder Sulfogruppen enthaltende ein- oder mehrbasische Carbonsäuren und als hydrophobe Einheiten kondensierte Blöcke aus aromatischen mehrbasischen Carbonsäuren, gegebenenfalls in Kombination mit aliphatischen mehrbasischen Carbonsäuren, und $C_2$- bis $C_4$-Alkylenglykolen und/oder drei-oder mehrwertigen Alkoholen einsetzt.

4.  Verfahren nach Anspruch 1 oder 2, dadurch gekennzeichnet, daß man als amphiphile Polymere Polyester einsetzt, die Einheiten von

    (1)  Ethylenterephthalat und

    (2)  Polyoxyethylenterephthalat von Polyethylenglykolen mit Molmassen Mn von 1000 bis 7500

    im Gewichtsverhältnis (1) : (2) von 1:1 bis 1:25 enthalten.

5.  Verfahren nach Anspruch 1 oder 2, dadurch gekennzeichnet, daß man als amphiphile Polymere Polyester einsetzt, die erhältlich sind durch Kondensation von

    (1)  Carbonsäuren mit mindestens 2 Carboxylgruppen, deren Estern, Anhydriden oder Mischungen,

    (2)  mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und

    (3)  wasserlöslichen Anlagerungsprodukten von 5 bis 80 mol mindestens eines Alkylenoxids an 1 mol $C_8$- bis $C_{24}$-Alkohole, $C_8$- bis $C_{18}$-Alkylphenole oder $C_8$- bis $C_{24}$-Alkylamine

    im Molverhältnis (1):(2):(3) von 100 : (25 bis 2500): (5 bis 110) bei Temperaturen von mindestens 120°C bis zu Molmassen $M_W$ von 4000 bis 50000.

6.  Verfahren nach Anspruch 1 oder 2, dadurch gekennzeichnet, daß man als amphiphile Polymere Polyester einsetzt, die Blöcke aus

    (1)  Estereinheiten aus Polyalkylenglykolen einer Molmasse von 500 bis 7500 und aliphatischen Dicarbonsäuren und/oder Monohydroxycarbonsäuren und

    (2)  Estereinheiten aus aromatischen Dicarbonsäuren und mehrwertigen Alkoholen

    enthalten und Molmassen $M_W$ von 4000 bis 25000 haben.

7.  Verfahren nach einem der Ansprüche 1 bis 6, dadurch gekennzeichnet, daß man als anorganische Feststoffe anorganische Verbindungen einsetzt, die üblicherweise in Textilwaschmitteln verwendet werden.

8.  Verfahren nach einem der Ansprüche 1 bis 7, dadurch gekennzeichnet, daß man als anorganische Feststoffe die Carbonate, Sulfate, Silikate, Borate oder Phosphate von Alkalimetallen und/oder Erdalkalimetallen, Zeolithe, Kieselsäure oder Mischungen der genannten Verbindungen einsetzt.

9.  Verfahren nach einem der Ansprüche 1 bis 8, dadurch gekennzeichnet, daß die mittlere Teilchengröße der anor-

EP 0 792 341 B1

ganischen Feststoffe 1 µm bis 500 µm beträgt.

**10.** Verfahren nach einem der Ansprüche 1 bis 9, dadurch gekennzeichnet, daß man die Komponenten (a) und (b) bei Temperaturen von 80 bis 200°C mischt, und die Mischung auf einem gekühlten Band rasch abgekühlt.

**11.** Verfahren nach einem der Ansprüche 1 bis 10, dadurch gekennzeichnet, daß man die erstarrte Schmelze auf mittlere Teilchengrößen von 50 µm bis 5 mm zerkleinert.

**12.** Verfahren nach Anspruch 10, dadurch gekennzeichnet, daß man die Mischung nach dem Zerteilen und Abkühlen in Mühlen auf mittlere Korngrößen von 0,3 bis 1,3 mm mahlt.

**13.** Verfahren nach einem der Ansprüche 1 bis 12, dadurch gekennzeichnet, daß man die feinteiligen Mischungen mit 0,1 bis 5 Gew.-%, bezogen auf die Mischungen, eines festen Trennmittels mit einer Teilchengröße von 1 bis 100 µm pudert.

**14.** Verwendung der nach den Ansprüchen 1 bis 13 erhältlichen feinteiligen Mischungen als Zusatz zu Waschmitteln.


**Claims**

**1.** A process for preparing finely divided mixtures of amphiphilic polymers and inorganic solids, wherein

    (a)    97 - 10 % by weight of at least one amphiphilic polymer whose softening point is above 35°C, and

    (b)    3 - 90 % by weight of at least one inorganic solid with an average particle size not exceeding 500 µm

are heated to a temperature above the softening point of the polymer, components (a) and (b) are thoroughly mixed at this temperature, the mixture is then dispersed and rapidly cooled so that virtually no inhomogeneity occurs and, where appropriate, the mixture is subsequently comminuted to an average particle size of from 50 µm to 5 mm at temperatures below 50°C.

**2.** A process as claimed in claim 1, wherein completely or partly crystalline, water-dispersible, amphiphilic polymers are employed.

**3.** A process as claimed in claim 2, wherein the partly crystalline, amphiphilic polymers employed are polyesters which have a molecular weight $M_W$ of from 4000 to 60,000 and comprise as hydrophilic units polyethylene glycol, block copolymers of ethylene oxide and propylene oxide and/or butylene oxide with molecular weights $M_N$ of from 500 to 8000 and/or sulfo-containing monobasic or polybasic carboxylic acids and comprise as hydrophobic units condensed blocks of aromatic polybasic carboxylic acids, where appropriate combined with aliphatic polybasic carboxylic acids and $C_2$-$C_4$-alkylene glycols and/or trihydric or polyhydric alcohols.

**4.** A process as claimed in claim 1 or 2, wherein the amphiphilic polymers employed are polyesters which comprise units of

    (1)    ethylene terephthalate and

    (2)    polyoxyethylene terephthalate from polyethylene glycols with molecular weights $M_n$ of from 1000 to 7500

in the (1) : (2) ratio of from 1 : 1 to 1 : 25 by weight.

**5.** A process as claimed in claim 1 or 2, wherein the amphiphilic polymers employed are polyesters obtainable by condensation of

    (1)    carboxylic acids having at least two carboxyl groups, their esters, anhydrides or mixtures,

    (2)    at least dihydric alcohols and/or adducts of from 1 to 5 mol of at least one alkylene oxide having 2 or 3 carbon atoms and 1 mol of an at least dihydric alcohol or mixtures and

(3) water-soluble adducts of from 5 to 80 mol of at least one alkylene oxide and 1 mol of $C_8$-$C_{24}$-alcohols, $C_8$-$C_{18}$-alkylphenols or $C_8$-$C_{24}$-alkylamines

in the (1) : (2) : (3) molar ratio of from 100 : (25 to 2500) : (5 to 110) at temperatures of at least 120°C up to molecular weights $M_W$ of from 4000 to 50,000.

6. A process as claimed in claim 1 or 2, wherein the amphiphilic polymers employed are polyesters which comprise blocks of

(1) ester units from polyalkylene glycols with a molecular weight of from 500 to 7500 and aliphatic dicarboxylic acids and/or monohydroxycarboxylic acids and

(2) ester units from aromatic dicarboxylic acids and polyhydric alcohols

and have molecular weights $M_W$ of from 4000 to 25,000.

7. A process as claimed in any of claims 1 to 6, wherein the inorganic solids employed are inorganic compounds normally used in textile detergents.

8. A process as claimed in any of claims 1 to 7, wherein the inorganic solids employed are the carbonates, sulfates, silicates, borates or phosphates of alkali metals and/or alkaline earth metals, zeolites, silica or mixtures of said compounds.

9. A process as claimed in any of claims 1 to 8, wherein the average particle size of the inorganic solids is from 1 µm to 500 µm.

10. A process as claimed in any of claims 1 to 9, wherein components (a) and (b) are mixed at from 80 to 200°C, and the mixture is rapidly cooled on a cooled belt.

11. A process as claimed in any of claims 1 to 10, wherein the solidified melt is comminuted to average particle sizes of from 50 µm to 5 mm.

12. A process as claimed in claim 10, wherein, after dispersion and cooling, the mixture is ground in mills to average particle sizes of from 0.3 to 1.3 mm.

13. A process as claimed in any of claims 1 to 12, wherein the finely divided mixtures are dusted with from 0.1 to 5 % by weight, based on the mixtures, of a solid release agent with a particle size of from 1 to 100 µm.

14. The use of a finely divided mixture obtainable as claimed in any of claims 1 to 13 as additive to detergents.


**Revendications**

1. Procédé de préparation de mélanges finement divisés de polymères amphiphiles et de solides inorganiques, caractérisé en ce que l'on chauffe

(a) 97-10% en poids d'au moins un polymère amphiphile, dont le point de ramollissement est situé au-dessus de 35°C, et
(b) 3-90% en poids d'au moins un solide inorganique ayant une granulométrie moyenne de 500 µm au maximum,

à une température située au-dessus du point de ramollissement du polymère, on mélange les composants (a) et (b) à cette température, on divise ensuite le mélange et on le refroidit rapidement, de sorte que quasiment aucune démixtion n'a lieu et on broie ensuite, éventuellement, le mélange à des températures inférieures à 50°C jusqu'à une granulométrie moyenne de 50 µm à 5 mm.

2. Procédé selon la revendication 1, caractérisé en ce que l'on utilise des polymères amphiphiles dispersables dans l'eau, partiellement ou totalement cristallins.

3. Procédé selon la revendication 2, caractérisé en ce que l'on utilise, comme polymères amphiphiles partiellement cristallins, des polyesters ayant une masse molaire $M_W$ de 4000 à 60 000 contenant en tant que motifs hydrophiles du polyéthylèneglycol, des copolymères séquencés d'oxyde d'éthylène et d'oxyde de propylène et/ou d'oxyde de butylène ayant des masses molaires $M_N$ de 500 à 8000 et/ou des mono- ou polyacides carboxyliques contenant des groupements sulfo, et en tant que motifs hydrophobes des blocs condensés de polyacides carboxyliques aromatiques éventuellement combinés avec des polyacides carboxyliques aliphatiques, et des (alkylène en $C_2$-$C_4$)glycols et/ou des alcools tri- ou polyfonctionnels.

4. Procédé selon la revendication 1 ou 2, caractérisé en ce que l'on utilise comme polymères amphiphiles des polyesters contenant des motifs

(1) de téréphtalate d'éthylène et
(2) de poly(oxyéthylènetéréphtalate) de polyéthylèneglycols ayant des masses molaires $M_N$ de 1000 à 7500 dans un rapport en poids (1):(2) de 1:1 à 1:25.

5. Procédé selon la revendication 1 ou 2, caractérisé en ce que l'on utilise comme polymères amphiphiles des polyesters qu'on obtient par condensation

(1) d'acides carboxyliques ayant au moins deux groupement carboxyle, de leurs esters, de leurs anhydrides ou de leurs mélanges,
(2) d'alcools au moins bifonctionnels et/ou de produits d'addition de 1 à 5 moles d'au moins un oxyde d'alkylène ayant 2 ou 3 atomes de carbone sur 1 mole d'un alcool au moins bifonctionnel, ou de leurs mélanges et
(3) de produits solubles dans l'eau de l'addition de 5 à 80 moles d'au moins un oxyde d'alkylène sur 1 mole d'alcools en $C_8$-$C_{24}$, d'(alkyle en $C_8$-$C_{18}$)phénols ou d'alkylamines en $C_8$-$C_{24}$ dans un rapport en moles (1):(2):(3) de 100:(25 à 2500):(5 à 110) à une température d'au moins 120°C jusqu'à des masses molaires $M_W$ de 4000 à 50000.

6. Procédé selon la revendication 1 ou 2, caractérisé en ce que l'on utilise comme polymères amphiphiles des polyesters contenant des blocs constitués

(1) de motifs ester formés à partir de polyalkylèneglycols ayant une masse molaire de 500 à 7500 et d'acides aliphatiques dicarboxyliques et/ou d'acides monohydroxycarboxyliques et
(2) de motifs ester formés à partir d'acides aromatiques dicarboxyliques et d'alcools polyfonctionnels et ayant des masses molaires $M_W$ de 4000 à 25000.

7. Procédé selon l'une quelconque des revendications 1 à 6, caractérisé en ce que l'on utilise comme solides inorganiques des composés inorganiques habituellement utilisés dans des agents de lavage pour textiles.

8. Procédé selon l'une quelconque des revendications 1 à 7, caractérisé en ce que l'on utilise comme solides inorganiques les carbonates, sulfates, silicates, borates ou phosphates de métaux alcalins et/ou de métaux alcalino-terreux, des zéolithes, de la silice ou des mélanges des composés cités.

9. Procédé selon l'une quelconque des revendications 1 à 8, caractérisé en ce que la granulométrie moyenne des solides inorganiques vaut de 1 µm à 500 µm.

10. Procédé selon l'une quelconque des revendications 1 à 9, caractérisé en ce que l'on mélange les composants (a) et (b) à des températures de 80-200°C et on refroidit rapidement le mélange sur une courroie refroidie.

11. Procédé selon l'une quelconque des revendications 1 à 10, caractérisé en ce que l'on broie la masse fondue solidifiée jusqu'à une granulométrie moyenne de 50 µm à 5 mm.

12. Procédé selon la revendication 10, caractérisé en ce que l'on moût le mélange, après division et refroidissement dans le moulin, jusqu'à une granulométrie moyenne de 0,3 à 1,3 mm.

13. Procédé selon l'une quelconque des revendications 1 à 12, caractérisé en ce que l'on soupoudre les mélanges finement divisés avec 0,1-5% en poids, par rapport aux mélanges, d'un agent de démoulage solide ayant une granulométrie de 1 à 100 µm.

**14.** Utilisation des mélanges finement divisés obtenus selon l'une quelconque des revendications 1 à 13, en tant qu'additifs pour agents de lavage.